# EUROPEAN PATENT APPLICATION

(11) **EP 4 503 327 A1**
(43) Date of publication of application: **05.02.2025**
(21) Application number: 23860901.0
(22) Date of filing: 31.08.2023
(51) Int. Cl.: H01M 50/59, H01M 50/581, H01M 50/46, B32B 27/08, B32B 27/32, B32B 27/34, B32B 27/36

(54) **SECONDARY BATTERY AND DEVICE INCLUDING SAME**

(30) Priority: 01.09.2022 KR 20220110744; 30.08.2023 KR 20230114560
(71) Applicant: LG Energy Solution, Ltd., Seoul 07335 (KR)
(72) Inventor: LEE, Hanyoung, Daejeon 34122 (KR)
(74) Representative: Plasseraud IP
(86) International application number: PCT/KR2023/012950
(87) International publication number: WO 2024/049225

(57) **Abstract**

A secondary battery according to an embodiment of the present disclosure includes: an electrode assembly including a cathode, an anode and a separator; a battery case that houses the electrode assembly; and a protective member formed between the electrode assembly and the battery case, wherein the protective member comprises a first protective layer, a second protective layer, and a denaturation member formed between the first protective layer and the second protective layer.

## Description

### [TECHNICAL FIELD]

### Cross Citation with Related Application(s)

This application claims the benefit of Korean Patent Application No. 10-2022-0110744 filed on September 1, 2022 and Korean Patent Application No. 10-2023-0114560 filed on August 30, 2023, the disclosures of which are incorporated herein by reference in their entirety.

The present disclosure relates to a secondary battery and a device including the same, and more particularly, to a secondary battery having improved safety and a device including the same.

### [BACKGROUND]

As technology development and demands for mobile devices increase, the demand for secondary batteries as energy sources has been rapidly increasing. A variety of researches on batteries capable of meeting various needs have been carried out accordingly.

A secondary battery has attracted considerable attention as an energy source for power-driven devices, such as an electric bicycle, an electric vehicle, and a hybrid electric vehicle, as well as an energy source for mobile devices, such as a mobile phone, a digital camera, and a laptop computer.

In recent years, attempts have been made to apply various materials to develop a secondary battery having good performance in terms of high energy density, long life, and durability. However, even in the case of the secondary battery having such improved properties, internal gas generation may be a cause of problems in high potential and high temperature storage environments. The volume inside the secondary battery may increase or decrease due to the generation of such gas. The increase or decrease in volume of such internal components causes pressure on other components, and the generated pressure may lead to a physical impact on other secondary battery components, which may eventually decrease the function of the secondary battery or cause explosion of the secondary battery. Moreover, due to improvements in the performance of portable electronic devices, the energy density and operating voltage of the secondary battery are increasing, and it is necessary to ensure safety against such changes in the volume of the internal component.

In addition, in the case of the secondary battery, self-heating occurs in high potential and high temperature storage environments, and there is a problem in that thermal runaway occurs due to the accumulation of the self-heating, which may lead to an explosion of the secondary battery

Therefore, it is necessary to ensure safety against the occurrence of thermal runaway due to volumetric changes in the internal component and accumulation of self-heating.

### [DETAILED DESCRIPTION OF THE INVENTION]

### [Technical Problem]

It is an object of the present disclosure to provide a secondary battery having improved safety and a device including the same.

The objects of the present disclosure are not limited to the foregoing objects, and any other objects and advantages not mentioned herein should be clearly understood by those skilled in the art from the following description and the accompanying drawing.

### [Technical Solution]

According to an embodiment of the present disclosure, there is be provided a secondary battery comprising: an electrode assembly including a cathode, an anode and a separator; a battery case that houses the electrode assembly; and a protective member formed between the electrode assembly and the battery case, wherein the protective member comprises a first protective layer, a second protective layer, and a denaturation member formed between the first protective layer and the second protective layer.

The denaturation member is deformed when the internal temperature of the secondary battery increases, and the deformed denaturation member may rupture the first protective layer and the second protective layer.

The denaturation member being deformed may mean that a deformation part is formed in the denaturation member due to an increase in the internal temperature of the secondary battery.

The denaturation member rupturing the first protective layer and the second protective layer may mean that the deformation part forms a ruptured portion in the first protective layer and the second protective layer.

The first protective layer comprises a first case and a first material layer including a first material, and the second protective layer comprises a second case and a second material layer including a second material, wherein the first material and the second material may be mutually different materials.

The first material may include a hardening catalytic agent, and the second material may include an adhesive.

The first material and the second material may come into contact and react with each other due to the rupture of the first protective layer and the second protective layer.

A hardened layer may be formed inside the battery case by the reaction of the first material and the second material.

The first case and the second case may include one or more materials selected from the group consisting of a low density polyethylene(LDPE), a high density polyethylene(HDPE), an oriented polypropylene(OPP), a casting polypropylene(CPP), an oriented nylon (ON), a casting nylon(CN), and polyethylene terephthalate(PET).

The first material may include one or more materials selected from the group consisting of polyol, polyether polyol, and polyester polyol.

The second material may include one or more materials selected from the group consisting of diisocyanate (TDI), methylene diphenyl diisocyanate(MDI), hexamethylene diisocyanate(HDI), and isophorone diisocyanate(IPDI).

A content ratio of the first material and the second material may be 30:70 to 70:30.

The denaturation member may include a shape memory alloy layer or an electroactive polymer layer.

The secondary battery may further comprise a piezoelectric element connected to the electroactive polymer layer.

According to another embodiment of the present disclosure, there is be provided a device comprising the above-mentioned secondary battery.

### [Advantageous Effects]

According to the embodiments, even if the secondary battery temperature increases due to self-heating of the secondary battery of the present disclosure, the protective layer is destroyed by the shape memory alloy before thermal runaway occurs, and the hardening catalytic agent and the adhesive come into contact and react with each other to form a hardened layer inside the case, thereby being able to minimize the possibility of occurrence of thermal runaway and maintain the secondary battery in a safe state.

The effects of the present disclosure are not limited to the effects mentioned above, and additional other effects not mentioned will be clearly understood from the description and the accompanying drawings by those skilled in the art.

### [BRIEF DESCRIPTION OF THE DRAWINGS]

FIG. 1 is a cross-sectional view showing a secondary battery according to an embodiment of the present disclosure;
FIG. 2 is an enlarged view of section A of FIG. 1 and is a cross-sectional view showing a protective member included in a secondary battery according to an embodiment of the present disclosure;
FIG. 3 is a cross-sectional view showing a state where the protective member of FIG. 2 is deformed due to an increase in temperature of the secondary battery;
FIG. 4 is an enlarged view of section B of FIG. 3;
FIG. 5 is a plan view of a partial configuration of the secondary battery described in FIGS. 1 to 4 according to an embodiment of the present disclosure as viewed from above;
FIG. 6 is an enlarged view of section A of FIG. 1 and is a cross-sectional view showing a protective member included in a secondary battery according to another embodiment of the present disclosure;
FIG. 7 is a cross-sectional view showing a state where the protective member of FIG. 6 is deformed due to an increase in temperature of the secondary battery; and
FIG. 8 is a plan view of a partial configuration of the secondary battery described in FIGS. 6 and 7 according to an embodiment of the present invention as viewed from above.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure can be modified in various different ways, and is not limited to the embodiments set forth herein.

Portions that are irrelevant to the description will be omitted to clearly describe the present disclosure, and like reference numerals designate like elements throughout the description.

Further, since the size and thickness of each element shown in the accompanying drawing are arbitrarily illustrated for convenience of explanation, it would be obvious that the present disclosure is not necessarily limited to those illustrated in the drawings. In the drawings, the thickness are exaggerated for clearly expressing several layers and regions. In the drawings, for convenience of explanation, the thicknesses of some layer and regions are exaggerated.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

Now, a secondary battery according to the present disclosure will be described with reference to the accompanying drawings.

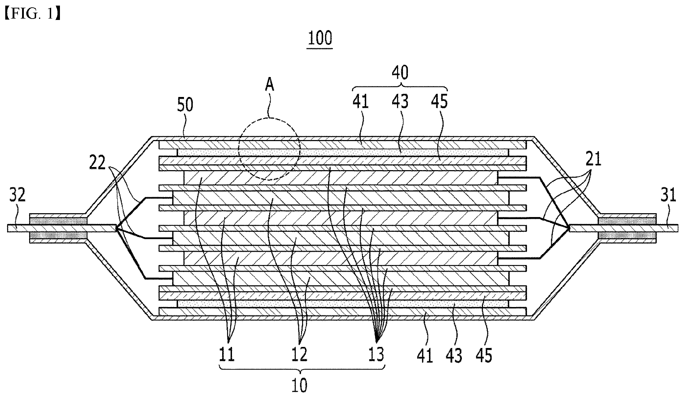

FIG. 1 is a cross-sectional view showing a secondary battery according to an embodiment of the present disclosure.

Referring to FIG. 1, a secondary battery 100 according to the present embodiment comprises an electrode assembly 10 including a cathode 11, an anode 12 and a separator 13; a battery case 50 that houses the electrode assembly 10; and a protective member 40 formed between the electrode assembly 10 and the battery case 50, wherein the protective member 40 comprises a first protective layer 41, a second protective layer 45, and a shape memory alloy layer 43 formed between the first protective layer 41 and the second protective layer 45.

The electrode assembly 10 includes a cathode 11, an anode 12, and a separator 13 interposed between the cathode 11 and the anode 12. Further, a cathode tab 21 is formed on one side of the cathode 11, an anode tab 22 is formed on one side of the anode 12, and the cathode tab 21 and the anode tab 22 may be arranged side by side at regular intervals. The tabs can be connected to the cathode lead 31 and the anode lead 32, respectively, thereby being connected to an external circuit.

Further, the electrode assembly 10, the cathode tab 21, and the anode tab 22 may be sealed by a pouch-shaped battery case 50. The battery case 50 may typically be made of a laminated sheet including a resin layer and a metal layer. At this time, in order to electrically connect with the outside of the electrode assembly 10, a part of the cathode lead 31 and the anode lead 32 may be sealed by a pouch in a state of being exposed to the outside. However, the type of the battery case 50 is not limited to thereto, and may be a prismatic or cylindrical case.

In the present embodiment, the secondary battery 100 includes a protective member 40 formed between the electrode assembly 10 and the battery case 50. The protective member 40 is formed between the electrode assembly 10 and the battery case 50 as shown in FIG. 1, and may be formed on both the upper part and the lower part of the electrode assembly 10, but is not limited thereto, and may be located corresponding to only one surface of the electrode assembly 10.

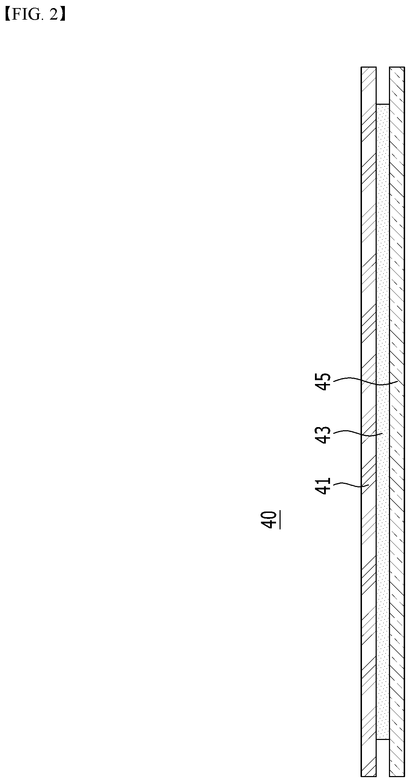

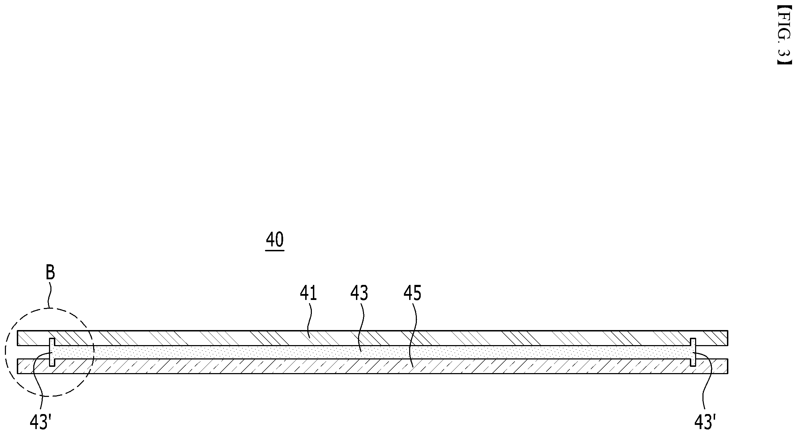

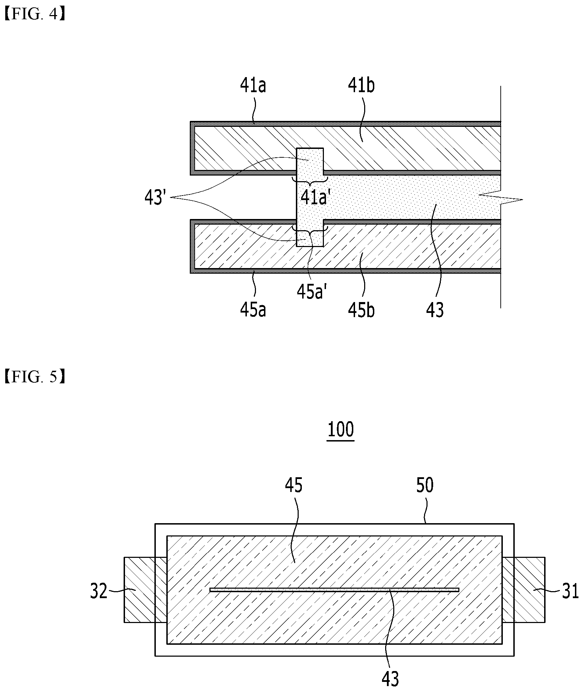

FIG. 2 is an enlarged view of section A of FIG. 1 and is a cross-sectional view showing a protective member included in a secondary battery according to an embodiment of the present disclosure. FIG. 3 is a cross-sectional view showing a state where the protective member of FIG. 2 is deformed due to an increase in temperature of the secondary battery. FIG. 4 is an enlarged view of section B of FIG. 3. FIG. 5 is a plan view of a partial configuration of the secondary battery according to an embodiment of the present disclosure as viewed from above.

Referring to FIG. 2, the protective member 40 has a first protective layer 41, a second protective layer 45, and a shape memory alloy layer 43 formed between the first protective layer 41 and the second protective layer 45. At this time, FIGS. 1 and 2 illustrate that the first protective layer 41 is located on the battery case 50 side, the second protective layer 45 is located on the electrode assembly 10 side, but the present disclosure is not limited thereto, the second protective layer 45 may be located on the battery case 50 side, and the first protective layer 41 may be located on the electrode assembly 10 side. Further, if it does not disturb cell operation, the first protective layer 41 and the second protective layer 45 may be disposed on a lead part such as the cathode lead 31 or the anode lead 32 or in a portion where the pouch case 50 is sealed.

Further, referring to FIG. 5, the shape memory alloy layer 43 may be formed to have a smaller area than in the first protective layer 41 and the second protective layer 45. However, in FIG. 5, illustration of the first protective layer 41 is omitted, but it will be obvious that the first protective layer 41 is formed in an upper part of the shape memory alloy layer 43.

At this time, referring to FIGS. 2 and 4, the first protective layer 41 may include a first case 41a and a first material layer 41b including a first material, and the second protective layer 45 may include a second case 45a and a second material layer 45b including a second material. The first material and the second material may be mutually different materials.

Therefore, in FIGS. 2 and 4, the shape memory alloy layer 43 is located between the first protective layer 41 and the second protective layer 45, and the first material layer 41b and the second material layer 45b are separated by the first case 41a and the second case 45a so as not to contact each other. In this case, the first material layer 41b and the second material layer 45b do not react with each other, and the secondary battery 100 operates normally.

On the other hand, in the case of the secondary battery 100, self-heating may occur in high-potential and high-temperature storage environments, and therefore, when the internal temperature of the secondary battery 100 increases due to such self-heating of the secondary battery 100, the shape memory alloy layer 43 can be deformed.

Referring to FIGS. 3 and 4, when the internal temperature of the secondary battery 100 increases, the shape memory alloy layer 43 is deformed at a temperature before thermal runaway occurs, and the deformed shape memory alloy layer 43 may rupture the first protective layer 41 and the second protective layer 45. In one example, since thermal runaway occurs at approximately 140 degrees Celsius to 150 degrees Celsius, the shape memory alloy layer 43 may operate at about 130 degrees Celsius or less.

At this time, the deformation of the shape memory alloy layer 43 may mean that a deformation part 43' is formed in the shape memory alloy layer 43 due to an increase in the internal temperature of the secondary battery 100.

Specifically, shape memory alloy is a material that restore the shape before deformation when heated to a certain temperature or higher, and when the internal temperature of the secondary battery 100 increases through this phenomenon, a deformation part 43' may be formed in the shape memory alloy layer 43.

Therefore, the shape memory alloy layer 43 rupturing the first protective layer 41 and the second protective layer 45 may mean that the deformation part 43' ruptures the first protective layer 41 and the second protective layer 45. More specifically, the deformation part 43' forms rupture parts 41a' and 45a' in the first protective layer 41 and the second protective layer 45, thereby rupturing the first protective layer 41 and the second protective layer 45.

In particular, the ruptured parts 41a' and 45a' may be formed on the first case 41a and the second case 45a. That is, the rupture parts 41a' and 45a' are formed on the first case 41a and the second case 45a, respectively, so that the first material layer 41b and the second material layer 45b may be exposed to the outside of the first case 41a and the second case 45b, respectively.

Therefore, during self-heating of the secondary battery 100 according to the present embodiment, the first material layer 41b and the second material layer 45b may come into contact and react with each other due to the rupture of the first protective layer 41 and the second protective layer 45.

At this time, the first material layer 41b may include a hardening catalytic agent, and the second material layer 45b may include an adhesive.

Therefore, a hardened layer may be formed inside the battery case 50 by the reaction between the first material layer 41a and the second material layer 45b. The inner wall of the battery case 50 is reinforced with such a hardened layer, whereby it is possible not only to delay the temperature increase due to self-heating, but also to delay and suppress the occurrence of thermal runaway through the delay in the temperature increase.

In order to be ruptured by deformation of the shape memory alloy layer 43 in this way, the first case 41a and the second case 45a may include one or more materials selected from the group consisting of a low density polyethylene(LDPE), a high density polyethylene(HDPE), an oriented polypropylene(OPP), a casting polypropylene(CPP), an oriented nylon (ON), a casting nylon(CN), and polyethylene terephthalate(PET). The above materials are materials that can be ruptured by a predetermined pressure generated as the deformation part 43' is formed in the shape memory alloy layer 43. Moreover, the thickness of the first case 41a and the second case 45a may be 10 *µ*m to 50 *µ*m. If the thickness is less than 10 *µ*m, the first case 41a and the second case 45a may be destroyed even against a small impact, so that a hardened layer can be formed, which is thus not preferable. If the thickness exceeds 50 *µ*m, the first case 41a and the second case 45a are not destroyed despite deformation of the shape memory alloy layer 43, so that a hardened layer cannot be formed, which is thus not preferable.

Further, the first material layer 41b may include one or more materials selected from the group consisting of polyol, polyether polyol, and polyester polyol.

The second material layer 45b may include one or more materials selected from the group consisting of diisocyanate (TDI), methylene diphenyl diisocyanate(MDI), hexamethylene diisocyanate(HDI), and isophorone diisocyanate(IPDI).

Therefore, a compound such as polyurethane may be formed through a reaction between the first material layer 41b and the second material layer 45b to thereby form a hardened layer.

In order to effectively cause a reaction between the first material layer 41b and the second material layer 45b upon contact, the content ratio of the first material layer 41b and the second material layer 45b may be 30:70 to 70:30.

The first material and the second material may be semi-solid materials with a viscosity in the range of 10 to 90,000 cP. If the viscosity is too low, the first material or the second material may flow out to cause a reaction even when the first case 41a and the second case 45a are not destroyed, which is thus not preferable. If the viscosity is too high, it is not preferable in that even if the first case 41a and the second case 45a are destroyed, sufficient reaction does not occur between the first material and the second material, which makes it difficult to form a hardened layer.

In this secondary battery 100, the first material layer 41b and the second material layer 45b are separated by the shape memory alloy layer 43 and the cases 41a and 45a under normal operating conditions, so that normal operation is possible without the formation of a hardened layer. Further, if the internal temperature of the secondary battery 100 increases due to various reasons under abnormal conditions such as overcharging, high potential, or high temperature storage environments, the shape memory alloy layer 43 is deformed and the first material layer 41b and the second material layer 45b come into contact with each other to form a hardened layer. Thereby, by reinforcing the inner wall of the battery case 50, it is possible to delay thermal runaway caused by an additional temperature increase and further improve the safety of the secondary battery.

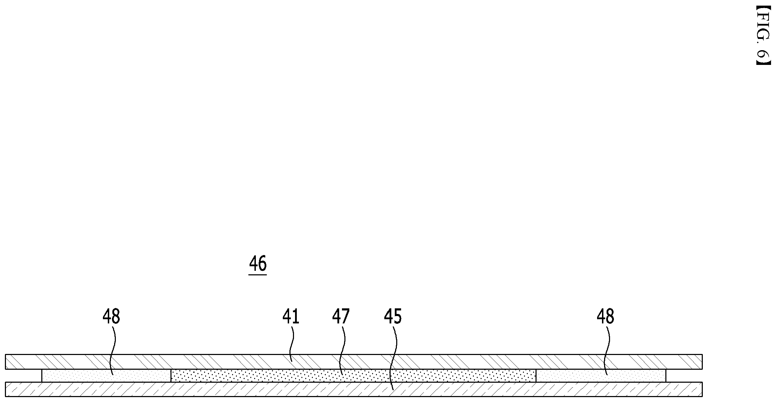

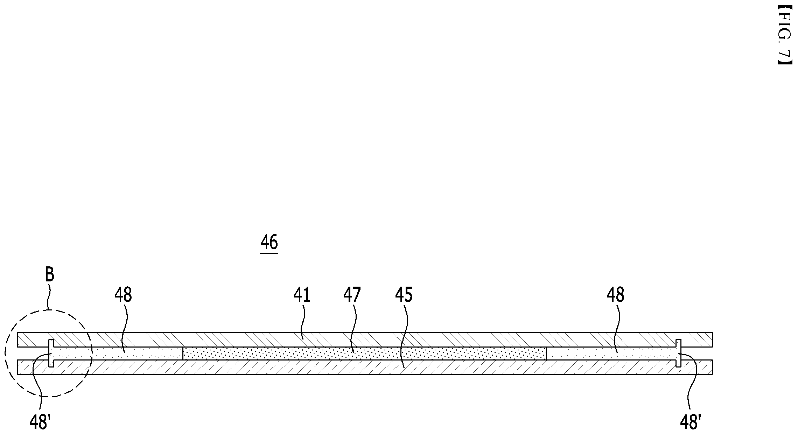

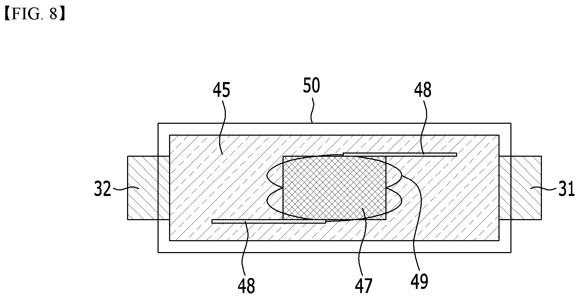

FIG. 6 is an enlarged view of section A of FIG. 1 and is a cross-sectional view showing a protective member included in a secondary battery according to another embodiment of the present disclosure. FIG. 7 is a cross-sectional view showing a state where the protective member of FIG. 6 is deformed due to an increase in temperature of the secondary battery. FIG. 8 is a plan view of a partial configuration of the secondary battery described in FIGS. 6 and 7 according to an embodiment of the present invention as viewed from above.

Referring to FIG. 6, the protective member 46 according to the present embodiment may include a first protective layer 41, a second protective layer 45, and a denaturation member formed between the first protective layer 41 and the second protective layer 45. In place of the shape memory alloy layer 43 described in the embodiment of FIGS. 2 to 5, a piezoelectric element 47 and an electroactive polymer layer 48 can be included as the denaturation member.

According to the present embodiment, at least one electroactive polymer layer 48 may be electrically and/or physically connected to the piezoelectric element 47. Referring to FIG. 8, the piezoelectric element 47 may come into contact with the electroactive polymer layer 48 at a portion of both side surfaces, and may be connected to the piezoelectric element 47 through the connecting member 49. Through this connection structure, an electrical signal generated by applying pressure to the piezoelectric element 47 can be transmitted to the electroactive polymer layer 48 via the connection member 49.

Specifically, the pressure increases due to an increase in the internal temperature of the secondary battery 100 and/or gas generation, and this pressure may be transmitted to the piezoelectric element 47. When pressure is applied to the piezoelectric element 47, the electroactive polymer layer 48 is operated by the electrical current generated thereby. In one example, as shown in FIG. 7, a physical deformation of the electroactive polymer layer 48 may occur to form a deformation part 48' in the electroactive polymer layer 48. The first protective layer 41 and the second protective layer 45 may be ruptured due to this deformation part 48'. The shape of the deformation part 48' shown in FIG. 7 is an example, and the shape of the deformation part 48' shown in FIG. 7 can be deformed by contraction and expansion of the electroactive polymer layer 48 due to movement and diffusion of ions in response to changes in external voltage.

Except for the description regarding the electroactive polymer layer 48 described above, the contents described in the embodiment of FIGS. 2 to 5 is also applicable to the present embodiment.

The secondary battery according to the present embodiment as described above can be applied to various devices. Specifically, it can be applied to a vehicle means such as an electric bicycle, an electric vehicle, or a hybrid vehicle, but is not limited thereto and can be applied to various devices that can use secondary batteries.

The invention has been described in detail with reference to preferred embodiments thereof. However, it will be appreciated by those skilled in the art that the scope of the present disclosure is not limited thereto, and various modifications and improvements can be made in these embodiment without departing from the principles and sprit of the invention, the scope of which is defined in the appended claims and their equivalents.

### [Description of Reference Numerals]

10: electrode assembly
21, 22: cathode tab, anode tab
31, 32: cathode lead, anode lead
40: protective member
41: first protective layer
43: shape memory alloy layer
45: second protective layer
47: piezoelectric element
48: electroactive polymer layer
50: battery case
100: secondary battery

## Claims

1. A secondary battery comprising:
an electrode assembly including a cathode, an anode and a separator;
a battery case that houses the electrode assembly; and
a protective member formed between the electrode assembly and the battery case,
wherein the protective member comprises,
a first protective layer,
a second protective layer, and
a denaturation member formed between the first protective layer and the second protective layer.

2. The secondary battery of claim 1, wherein:
the denaturation member is deformed when the internal temperature of the secondary battery increases, and
the deformed denaturation member ruptures the first protective layer and the second protective layer.

3. The secondary battery of claim 2, wherein:
the denaturation member being deformed means that a deformation part is formed in the denaturation member due to an increase in the internal temperature of the secondary battery.

4. The secondary battery of claim 3, wherein:
the denaturation member rupturing the first protective layer and the second protective layer means that the deformation part forms a ruptured portion in the first protective layer and the second protective layer.

5. The secondary battery of claim 4, wherein:
the first protective layer comprises a first case and a first material layer including a first material, and the second protective layer comprises a second case and a second material layer including a second material,
wherein the first material and the second material are mutually different materials.

6. The secondary battery of claim 5, wherein:
the first material includes a hardening catalytic agent, and
the second material includes an adhesive.

7. The secondary battery of claim 5, wherein:
the first material and the second material come into contact and react with each other due to the rupture of the first protective layer and the second protective layer.

8. The secondary battery of claim 5, wherein:
a hardened layer is formed inside the battery case by the reaction of the first material and the second material.

9. The secondary battery of claim 5, wherein:
the first case and the second case include one or more materials selected from the group consisting of a low density polyethylene(LDPE), a high density polyethylene(HDPE), an oriented polypropylene(OPP), a casting polypropylene(CPP), an oriented nylon (ON), a casting nylon(CN), and polyethylene terephthalate(PET).

10. The secondary battery of claim 5, wherein:
the first material includes one or more materials selected from the group consisting of polyol, polyether polyol, and polyester polyol.

11. The secondary battery of claim 5, wherein:
the second material includes one or more materials selected from the group consisting of diisocyanate (TDI), methylene diphenyl diisocyanate(MDI), hexamethylene diisocyanate(HDI), and isophorone diisocyanate(IPDI).

12. The secondary battery of claim 5, wherein:
a content ratio of the first material and the second material is 30:70 to 70:30.

13. The secondary battery of claim 1, wherein:
the denaturation member includes a shape memory alloy layer or an electroactive polymer layer.

14. The secondary battery of claim 13, further comprising a piezoelectric element connected to the electroactive polymer layer.

15. A device comprising the secondary battery of claim 1.
